(19) **Europäisches Patentamt**
**European Patent Office**
**Office européen des brevets**

(11) **EP 1 216 184 B1**

(12) **EUROPEAN PATENT SPECIFICATION**

(45) Date of publication and mention
of the grant of the patent:
**02.01.2013 Bulletin 2013/01**

(21) Application number: **00957922.8**

(22) Date of filing: **30.08.2000**

(51) Int Cl.:
*B62D 49/04* (2006.01)  *B62D 51/04* (2006.01)
*H02P 1/10* (2006.01)  *B60K 1/02* (2006.01)
*B60K 6/00* (2007.10)

(86) International application number:
**PCT/US2000/023815**

(87) International publication number:
**WO 2001/015960 (08.03.2001 Gazette 2001/10)**

(54) **POWER-ASSIST VEHICLE**

FAHRZEUG MIT HILFSANTRIEB

VEHICULE A ENTRAINEMENT ASSISTE

(84) Designated Contracting States:
**AT BE CH CY DE DK ES FI FR GB GR IE IT LI LU
MC NL PT SE**

(30) Priority: **31.08.1999 US 388124**

(43) Date of publication of application:
**26.06.2002 Bulletin 2002/26**

(60) Divisional application:
**10161759.5 / 2 206 640**

(73) Proprietor: **Deltaglide, Inc.
Hamden, CT 06517 (US)**

(72) Inventors:
• **ULRICH, Nathan
Lee, NH 03824 (US)**

• **YOERGER, Dana, R.
North Falmouth, MA 02556 (US)**

(74) Representative: **Klunker . Schmitt-Nilson . Hirsch
Patentanwälte
Destouchesstrasse 68
80796 München (DE)**

(56) References cited:
**EP-A- 0 675 037  EP-A- 0 771 721
EP-A- 0 826 590  WO-A1-95/05141
JP-A- 10 014 982  US-A- 5 234 066
US-A- 5 366 037  US-A- 5 732 786
US-A- 5 818 189  US-A- 5 922 035
US-A- 5 927 414  US-A- 6 112 837**

**Description**

**TECHNICAL FIELD OF THE INVENTION**

The present invention relates generally to power-assist wheel chair.

**BACKGROUND OF THE INVENTION**

Various types of vehicles are currently in use that are capable of providing controlled power assistance to the user. Such vehicles include electric bicycles, handcarts, and various lifting devices. Another useful application of this concept is in a power-assist wheelchair. Examples of such wheelchairs are disclosed in U.S. Patent Numbers 5,818,189; 5,234,066; and 4,050,533. In a typical arrangement, a seated user operates the wheelchair by exerting a force upon a hand rim located on each side of the wheelchair. Each hand rim is normally directly attached by some means to an outer drive wheel. The outer drive wheel rotates by some power-assistance means associated with the movement of the hand rim. For example, U.S. Patent Number 4,050,533 discloses the use of individual motors driving each of two separate drive wheels. The motors are controlled by the amount of torque applied by an operator to the hand rim of the driving wheel. In this and similar systems, the force applied by the user is primarily utilized to activate and control the output of the motor to the outer drive wheels.

What is desired, however, is a gearing system that provides efficient mechanical assistance during those times when the electric system is inoperative, minimizes drivetrain drag from the motor, and reduces the energy requirement of the overall system.

JP 10 014982 A shows a wheelchair which is provided with a driving wheel, a hand rim, a battery part and a motor. A speed increasing device and a control part are provided in a casing. The speed increasing device has an inner gear, a carrier, four epicyclic gears and a solar gear. The inner gear is integrated with the driving wheel. The carrier is integrally connected with the hand rim through a sleeve. A strain gauge is fitted on the outer face of the sleeve. The control part controls the motor based on the magnitude of human driving force detected by means of the strain gauge to add a specified magnitude of electric driving force to the driving wheel.

WO 95/05141 A1 shows a measuring chair function which will enable the propulsion force applied to a drive ring by the chair user to be measured, and also to provide an electrically operated powerservo on conventional, manually driven wheelchairs. Power or force sensors are placed adjacent a respective attachment between drive ring and wheel and function to measure the propulsion force applied on the drive ring by the user. The drive ring is also held by other types of attachment means which lack the provision of power or force sensors and which solely provide a force effect in an axial direction and which have the smallest possible effect in the peripheral direction of the drive ring. Each wheel can be substituted for the conventional wheel of a wheelchair and includes quick coupling means to this end. Furthermore, each wheel may be provided with a drive assembly including a motor which can be controlled in response to the measurement signals delivered by the power sensors. A computer unit receives the power signal from each wheel, the wheel speed and also the settings chosen by the user and entered on an instrument panel, and calculates useful user information and is effective in controlling the motor in accordance with a variable program, in such instances when the arrangement includes a motor.

US 5 922 035 A discloses a fuzzy logic control method for controlling an electrical motor aided, manually powered vehicle is disclosed which is used to assist a rider of the vehicle. The vehicle comprises a gear transmission for driving the vehicle, a manually powered operator for receiving a manual force inputted by the rider for manual operation of the gear transmission, a servo motor for generating a torque output, a reduction gear and a clutch for coupling the torque output of the motor to the gear transmission, a brake for reducing speed of the vehicle, a force sensor for sensing the manual force applied by the rider to the manually powered operator, a speed sensor for sensing speed of the vehicle, a brake sensor for sensing on and off of the brake; and a motor sensor for sensing output of the motor. The method comprises the following steps: processing the outputs of the force sensor, speed sensor, brake sensor and motor sensor to generate a plurality of fuzzy variables; evaluating the rider's satisfaction in various categories by using the fuzzy variables and generating a correspondent voltage output for each of the categories; evaluating the rider's intention in each of the categories and generating a correspondent weighting factor for each category; multiplying the voltage output of each category by its correspondent weighting factor; and generating a voltage output according to the sum of all the weighted voltage outputs to control the servo motor to assist the rider.

**SUMMARY OF THE INVENTION**

The present invention as claimed provides a wheelchair including a drivetrain system that is light-weight, compact, and inexpensive. The user's input can be both mechanically and electronically enhanced to provide optimum system operation. Control circuitry is disclosed that controls the amount of power assistance based upon the needs of the individual user. This circuitry can be integrated into the gear housing to make a simple, compact, and easily-removable module. The circuitry can also be modified in accordance with the needs of the individual user by varying the change gear reduction ratio (larger reductions for primarily indoor or steep hill/ramp use and smaller reductions for sport or high-speed use) or other system parameters.

A torque or other input provided by the user is sensed through the use of a transducer. Because this sensing is integral to the drivetrain, there is no need for slip rings or other means of communicating torque signals through a rotating connection. The user can modify the system, during operation, by selecting a particular control map used by a central processing unit (CPU) to determine the performance features of the vehicle.

The drive wheel/hand rim assembly can be designed to be quickly removed. The small size of the drivetrain package allows for adaptation to a variety of wheelchair designs, including folding wheelchairs. The wheelchair can be folded and stored, either with or without the drive wheels being attached. Because each drivetrain assembly can weigh less than five pounds (excluding batteries), the package adds little weight to the wheelchair. These and other advantages of the present invention will be readily apparent in the following description of the preferred embodiment.

**BRIEF DESCRIPTION OF THE DRAWINGS**

Fig. 1 is a perspective view of a wheelchair with a gearing system of the present invention.
Fig. 2 shows an exploded, perspective view of a portion of the gearing system of Fig. 1.
Fig. 3 is an enlarged partial perspective view of the gearing system of Fig. 2.
Fig. 4 is a plan view of the gearing system of Fig. 3.
Fig. 5 is a perspective view of the gearing system of Fig. 2, including a motor.
Fig. 6 is a cross-sectional view of a first gearing assembly.
Fig. 7 is a schematic of the gearing system of Fig. 1.
Fig. 8 is a schematic of an overall control system concept
Fig. 9 is a schematic of a velocity servo loop.
Fig. 10 is a schematic for computing a desired wheel velocity.
Fig. 11 is a schematic of a user interface.
Fig. 12 is a schematic of an alternative overall control system concept

DESCRIPTION OF THE PREFERRED EMBODIMENTS

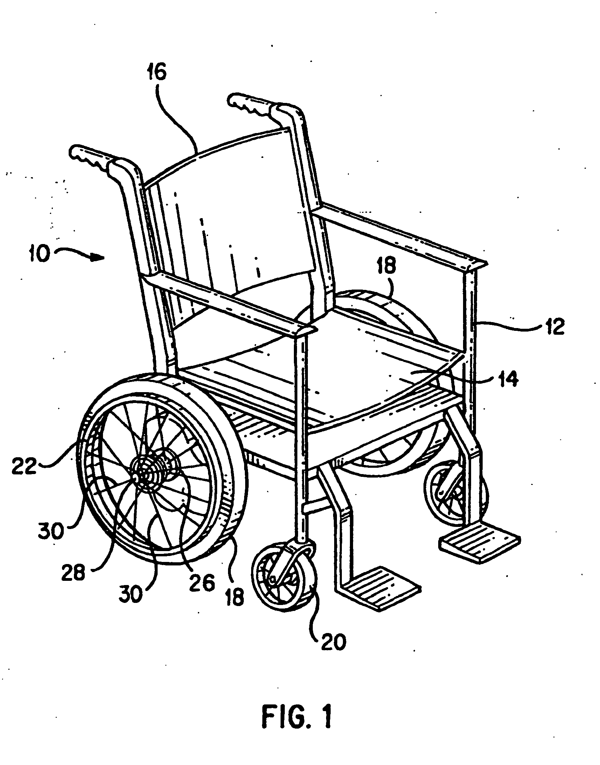

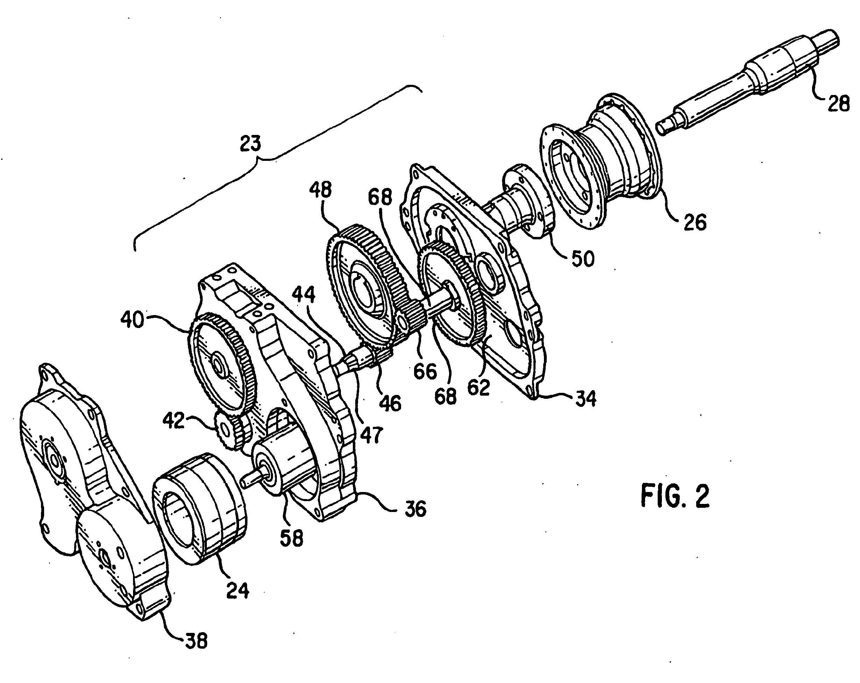

Fig. 1 shows a wheelchair 10 according to the present invention. The wheelchair 10 comprises a frame 12, a seat 14, a seat back 16, two ground engaging drive wheels 18, two ground engaging front wheels 20, two hand rims 22, and a gearing system 23 (as shown in Fig. 2) that connects each hand rim 22 and motor 24 to each drive wheel 18. The drive wheels 18 are on either side of the frame 12 and are mounted to a wheel hub 26. The wheel hub 26 is rotatably mounted to the frame 12. The hand rims 22 are attached to hand rim shafts 28 via spokes 30.

As will be described, the gearing system of the present invention is powered by two force inputs. One input is provided by a user. The other is provided by two electronically controlled motors, each powering one drive wheel. In those instances where the user is able to provide sufficient force to power the wheelchair, the motor 24 (as shown in Fig. 2) assists in that effort. In those instances where the user is unable to provide sufficient force to power the wheelchair, the motor acts as more as the primary means for operating the wheelchair.

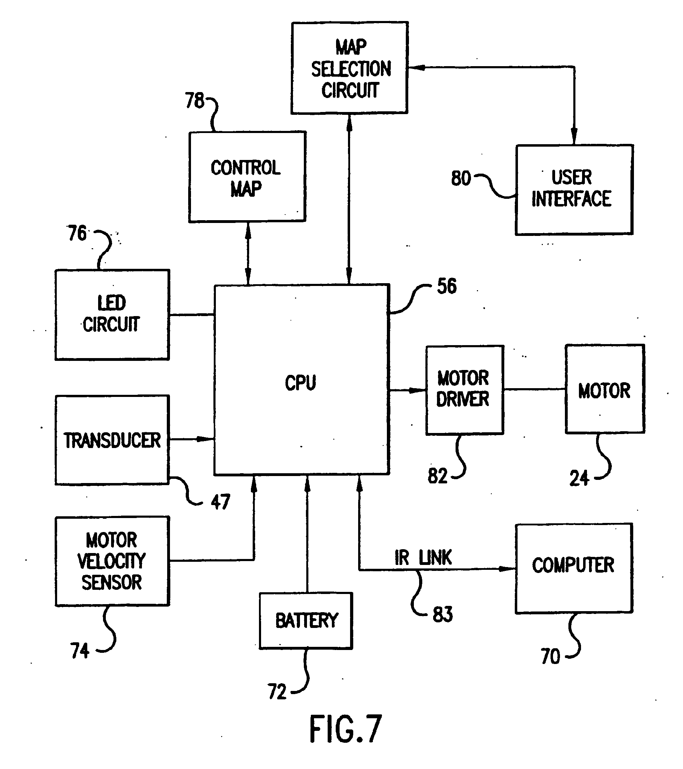

As shown in Fig. 2, the gearing system 23 of the present invention comprises first and second gear assemblies, and a control system (shown in Fig. 7). The first and second gear assemblies are supported and protected by a gear cover 34, a gear housing 36, and a motor housing 38. Although multiple gear assemblies are discussed in this preferred embodiment, this arrangement can easily be combined into one integral unit without departing from the scope of the present invention.

Referring to Figs. 2-6, the first gear assembly is a step-down gear reduction arrangement that is associated with the force input supplied by the user. This first gear assembly includes a hand rim subassembly and a change gear subassembly. The hand rim subassembly comprises the hand rim 22 (Fig. 1), a hand rim shaft 28, and a hand rim gear 40. The change gear subassembly (Fig. 2) comprises a change gear 42, a change gear shaft 44, and a change gear pinion 46. A transducer 47 is located on the change gear shaft 44.

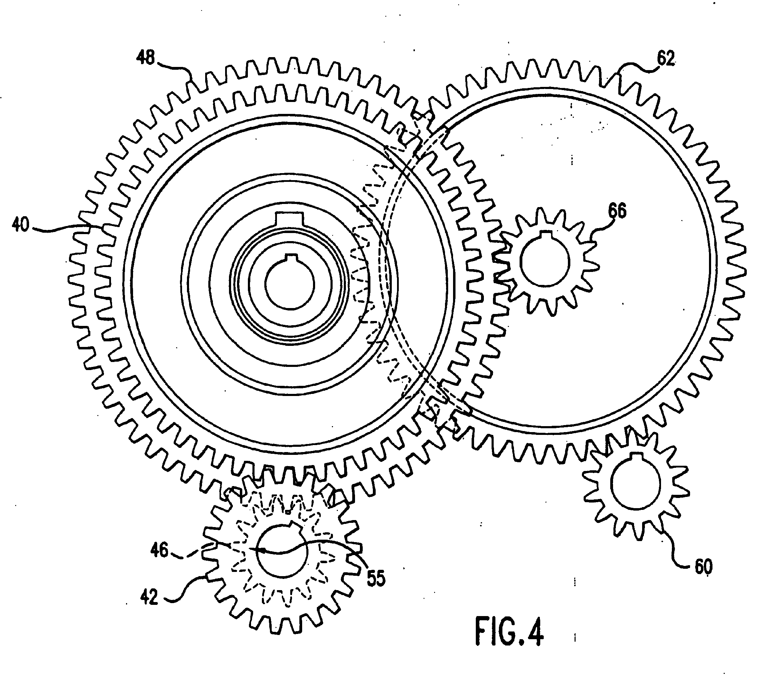

Due to a difference between the hand rim torque and the drive wheel torque, resulting from the step-down gearing, there is a reaction torque 55 (Fig. 4) that is taken up by the gear supports. The transducer 47 measures this reaction torque, which gives an accurate measure to the control system of the force inputted by the user.

The change gear assembly connects with an output gear assembly to act upon the drive wheel 18. The output gear assembly comprises an output gear 48 supported on an output shaft 50. The output shaft 50 passes through the gear cover 34 and connects with the wheel hub 26 to rotate the drive wheel 18 (Fig. 1).

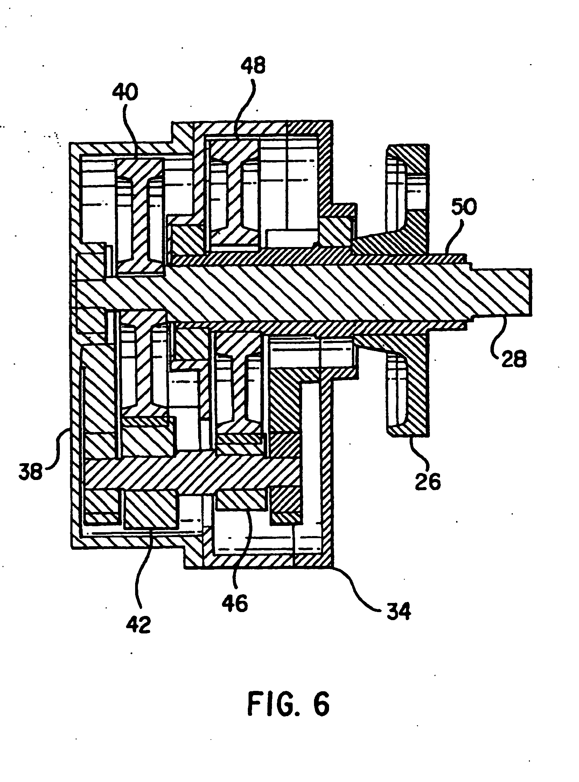

The hand rim assembly, the change gear assembly, and the output gear assembly cooperate in the following manner to transmit and enhance the user's force input to the drive wheels 18. The hand rim shaft 28 rotates as the user exerts a force upon each hand rim 22. This force is then transmitted directly to the hand rim gear 40 via the hand rim shaft 28, as shown in Figures 2, 3, 5 and 6. Referring to Fig. 6, the hand rim shaft 28 passes through the wheel hub 26, the output shaft 50, the gear cover 34, the output gear 48, the gear housing 36, and the hand rim gear 40 without significant diminution to the force being applied by the user. This may be accomplished by any suitable means, including but not limited to the use of bearings or a viscous substance such as lubricating oils. Either or all of the aforementioned elements may be used to provide support for the hand rim shaft 28 as it passes therethrough.

Turning to Figs. 2 and 4-6, the hand rim shaft 28 and the output shaft 50 are coaxial, but coupled through a N:1 reduction ratio where N turns of the hand rim 22 produces one turn of the outer drive wheel 18. The present invention will work effectively with any value of N not equal to 1, although it will be most effective where N is between 0.5 to 2.0. A ratio larger than one is most preferred because this produces a multiplication of user handwheel torque, which allows the user to climb steep hills or ramps beyond the capability of the motor alone.

Other implementations, such as sport chairs, may have a value of N less than 1. This is appropriate because, in such a case, it is desired that the speed of the hand rim 22 be slower than that of the outer drive wheel 18; thus, making the hand rim 22 easier to use at higher wheelchair speeds. Thus, the value of N can vary to accommodate the particular needs of the user and the intended use of the wheelchair without departing from the scope of the present invention.

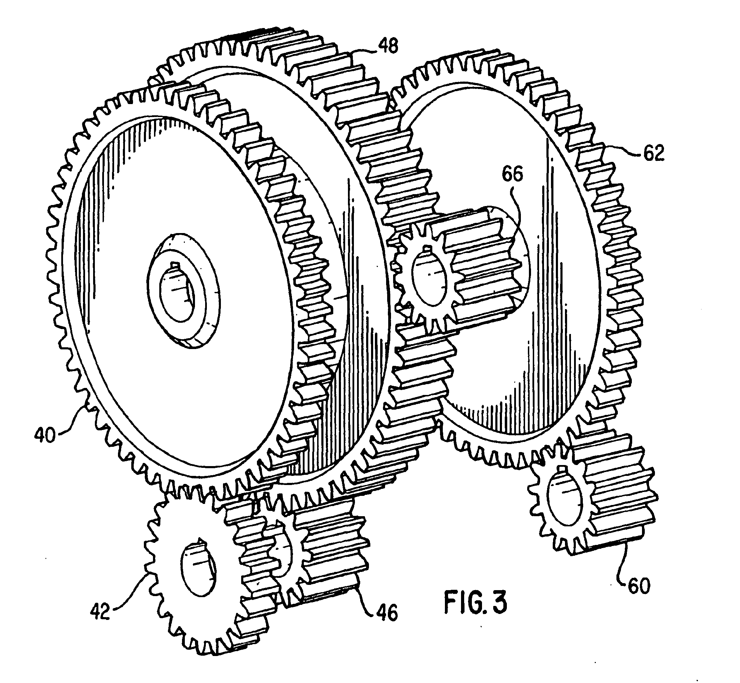

Referring to Fig. 3, as the hand rim gear 40 rotates, it causes the change gear 42 to also rotate. The change gear 42 is attached to a change gear pinion 46 via a change gear shaft 44. The change gear shaft 44 passes through and may be supported by the gear housing 36 (Fig. 2). With reference to Figs. 1 and 2, the change gear pinion 46 meshes with the output gear 48, which causes the drive wheel 18 to rotate via the output shaft 50, which is connected to the wheel hub 26.

As mentioned above, due to the step-down gear reduction associated with the gearing assemblies between the hand rim 22 and the drive wheel 18, the hand rim torque and the drive wheel torque will be different. This difference results in a reaction torque 55 (Fig. 4) that is taken up by the gear supports. The transducer 47 (shown in Fig. 2), which is preferably a torque sensor based on strain-gauge technology, is mounted on the change gear shaft 44 (Fig. 2) to measure this reaction torque. For this system, the hand rim torque $T_h$ is defmed by:

$$T_h = T_r / (N - 1)$$

where $T_h$ is the torque applied by the user to the hand rim, $T_r$ is the measured change gear reaction torque, and N is the change gear reduction ratio.

Turning to Fig. 7, the transducer 47 measures the hand rim torque $T_h$ and transmits this value to a central processing unit (CPU) 56. The operation of the control circuitry is described in more detail following the next section which describes the second gear assembly.

Referring to Figs. 2-5, the second gear assembly is associated with the force input supplied by the motor and includes the motor 24, a rotor 58, a motor pinion 60, an intermediate gear 62, an intermediate gear pinion 66, and an intermediate shaft 68. The motor 24 provides electronically controlled power assistance that augments the force applied by the user. The force provided by the motor 24 is transmitted through a two-stage gear reduction 41, preferably having spur gears. In the preferred embodiment, the motor 24 is a brushless DC servomotor. Also, the gear reduction ratio is approximately 18:1. As shown in Fig. 2, the motor 24 is encased between the motor housing 38 and the gear housing 36. The combination of a high-performance, low-friction motor and a small reduction ratio allows for minimal drivetrain drag when the motor 24 is unpowered, as could happen when the batteries run low or a system failure occurs.

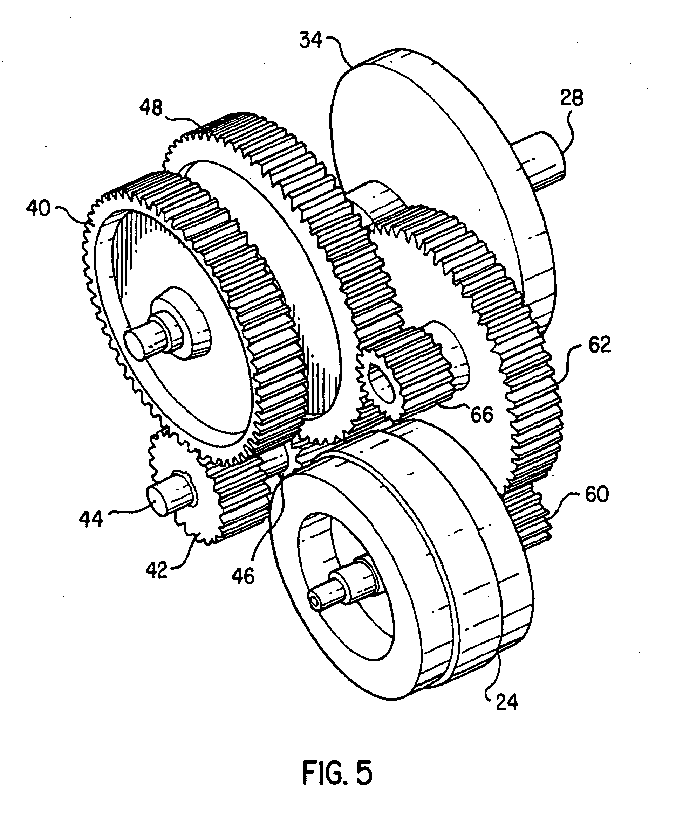

Referring to Figs. 2 and 5, the motor 24 drives the motor pinion 60 through a shaft (not shown) passing through the gear housing 36. As best shown in Figures 2-4, the motor pinion 60 meshes with the intermediate gear 62 through their associated gear teeth. The intermediate gear 62 connects to the intermediate gear pinion 66 via the intermediate shaft 68. The intermediate pinion 66 in-turn meshes with the output gear 48 to transmit the motor output to the drive wheel 18 (as shown in Fig. 1) through the output shaft 50, which is connected to the wheel hub 26.

The control system will now be described with reference to Fig. 7, which provides an operational overview of the system. Specifically, Fig. 7 shows components of a control system and the data passing between these components. The control system comprises an external personal computer-based component 70, a battery 72, a velocity sensor 74, the transducer 47, a LED circuit 76, a control map 78 and associated circuitry, a user interface 80, the CPU 56, and the motor 24 having an associated motor driver 82. The control map 78 may be either constant to the system or selectable by the user through the interface 80 with the CPU 56.

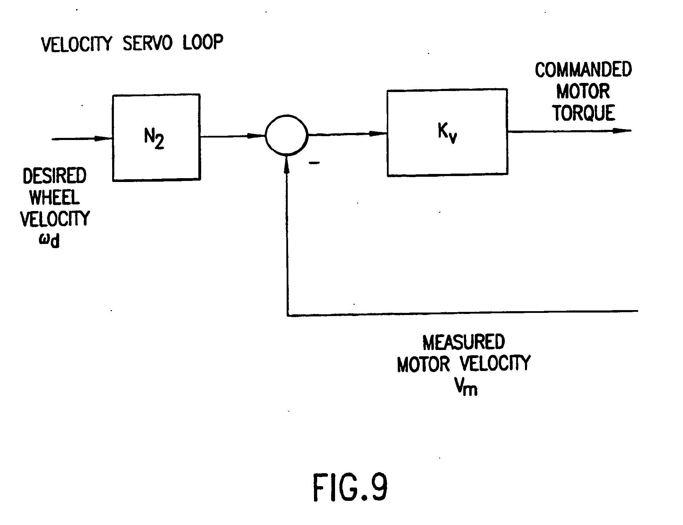

The control system operates through the CPU 56, which is preferably implemented as a programmable microprocessor. The circuitry for the control system is housed in a control box (not shown) that is, preferably, either integral with the drive unit/gear box or encased in a separate enclosure mounted on the frame. With reference to Figs. 1 and 7, the control system operates so that the user supplies a force to the hand rim 22 that is measured by the transducer 47. The transducer 47 transmits this value to the CPU 56, which utilizes a desired dynamic or control map to transform the measured torque value into a desired drive wheel velocity. The desired dynamic may be programmed into the CPU and may be specifically configured to meet the needs of the individual user. A velocity servo loop (Fig. 9) is used as an error measure to ensure proper system output based upon the selected control map. The sensor 74 measures the actual drive wheel 18 velocity and compares that value against the optimum or desired value through the velocity servo loop. The motor output is then increased or decreased to reduce the error component to the optimum value of zero.

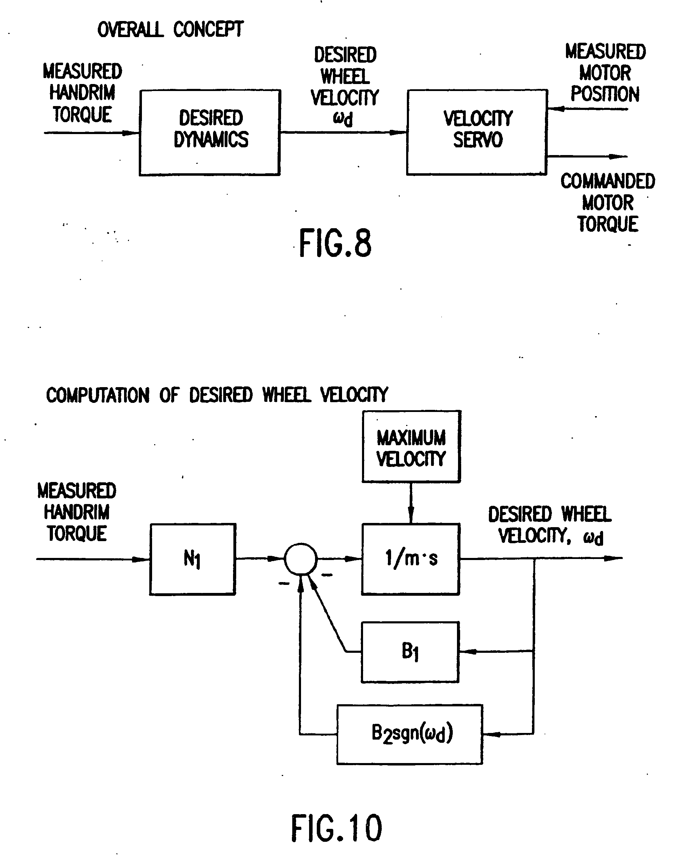

To put this concept in operation (Fig. 10), the CPU 56 accepts torque input from the transducer 47, command input from the interface 80 (when used) and velocity input from the sensor 74. In response, the CPU 56 outputs a control signal to the motor 24 via the motor driver 82. The CPU 56 is preferably programmable through the use of the PC-based computer 70 having associated memory storage. Resident on the computer is a design tool for specifying and downloading these control maps to the CPU 56. The infra-red (IR) link 83 facilitates data transfer between the CPU 56 and the external computer 70.

The CPU 56 also directs information downloaded from the data link, such as control maps, to an electrically erasable programmable read only memory (EEPROM). And, if the data link is appropriately configured to output information, the processor can upload data from a DRAM, or other volatile memory, via the data link. Software for governing the operation of the CPU 56 may also reside here. Furthermore, the CPU 56 may, upon request by the PC-based system 70, upload information that it has stored. Downloading and uploading are preferably performed by an infrared data link, although cabling, wireless data links, modems and other data exchange means may also be used.

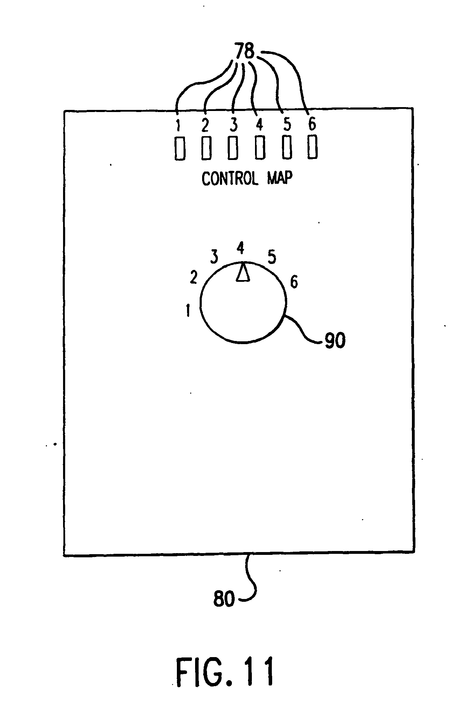

The various control maps may be accessed by the user through the use of the interface 80 (Figs. 7 and 11) between the user and the CPU. The interface 80 is provided with a switch 90 that allows the user to select between the various control maps pre-programmed into the CPU. The interface 80 may also have a display comprising a series of LEDs 78 used to indicate which control map has been selected by the user. Alternate displays (not shown), such as liquid crystal devices, displaying this information, along with other status data may be used in place of, or in addition to, the LEDs. The (IR) port 83 (shown in Fig. 7) facilitates communication with the PC-based component 70 to upload such data, and also to download control maps and other software. As stated above, other data links may be used in place of the IR port.

Once the user selects the desired control map, the CPU is ready to compute the desired system output. Computing the desired wheel velocity $\omega_d$ (Fig. 8) is based upon the following algorithms:

$$\dot{\omega}_d = \frac{1}{m}[N_1 T_h - B_1 \omega_d - B_2 \, \text{sgn}(\omega_d)]$$

$$\dot{\omega}_d = \min(\omega_d, \omega_{d\,max})$$

$$\omega_d = \max(\omega_d, -\omega_{d\,max})$$

In the above formulas, $N_1$ is the gear ratio between the hand rim 22 to the outer drive wheel 18, $m$ is the desired mass of the system, $B_1$ is the desired linear damping, $B_2$ is the desired coulomb damping, and $\dot{\omega}_d$ represents the first derivative with respect to time (1/s, Fig. 10). Due to the above formulas, the present invention is structured and tuned to mimic a wheelchair-like system with specific inertia and prescribed drag (combination of linear and coulomb friction).

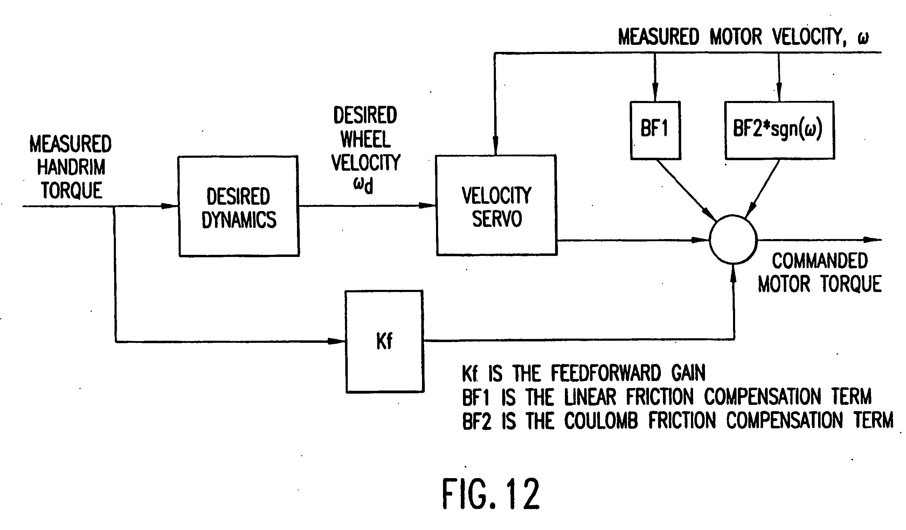

Alternatively, there may be supplied a feed forward signal path from the measured hand rim torque (Fig. 12). The feed forward path applies a fixed ratio of torque to the motor, where the ratio is determined by the gain, $K_F$. When the system utilizes the feed forward path, the desired wheel velocity $\omega_d$ is computed based upon the same algorithm described above. With reference to Fig. 12, $K_F$ is the feed forward gain, $B_{F1}$ is the linear friction compensation term and $B_{F2}$ is the coulomb friction compensation term. Both the linear and coulomb friction compensation terms are used to eliminate natural friction in the system. These components ($B_{F1}$ & $B_{F2}$) add torque based upon speed, either linearly for $B_{F1}$ or based on the sign of speed for $B_{F2}$. The present invention may utilize the feed forward term in both servo mode and by itself in feed forward mode. In servo mode, it helps the control system respond more quickly to operator input.

Alone, it provides torque augmentation.

The variables in the above formulas can be altered over a wide range to tailor the control map to the specific needs of the user. For example, by specifying low inertia, the system will accelerate and decelerate more strongly in response to a torque input at the hand rims. The net effect is that the operator's inputs are amplified by the reciprocal of the system mass. This is referred as the "sensitivity" of the system.

The preferred embodiment includes two types of damping, linear and coulomb. These damping terms are used both to tailor the response of the system to the needs of the user and to provide system stability. For example, the damping terms help the operator bring the speed to zero when desired and also keep the commanded speed at zero despite small offsets in the torque sensors. The linear damping term provides a resistive torque proportional to the desired speed that is similar to moving through a viscous fluid. The coulomb damping term provides a resistive torque of fixed magnitude that is similar to sliding an object across a smooth surface.

Other forms of damping may also be incorporated into the system, such as quadratic drag where the force increases with the square of the magnitude of the velocity. Increasing any damping term causes the desired velocity to return to zero more quickly in the absence of an applied torque input. At steady velocity, the drag terms set the amount of applied torque required to maintain that speed. If the damping terms are decreased, the chair will maintain its speed longer without additional torque input. The velocity limit simply prevents the desired velocity from exceeding a preset magnitude. From the user point of view, this feels much like heavy damping that cuts the limiting speed.

An additional feature of the present invention is its regenerative capabilities. For example, when the motor is slowing down the wheelchair (as it does when in servo mode going downhill) power is routed back into the battery. Similarly, the chair brakes actively on level ground when the terms $B_1$ and $B_2$ (Fig. 10) reduce the desired velocity, and the velocity controller reduces the actual speed by applying the appropriate opposing torque. Then the regenerative action transfers energy from the kinetic energy of the moving mass back into the battery. Whenever the applied torque and velocity have opposite signs, the system puts much of the resulting dissipated power back into the battery, with the motor controller routing the generated electrical energy back into the battery. This capability is unique to the low-friction environment of the present system. This environment allows the wheelchair to coast when no current is applied.

The desired dynamic (or control map) is created by varying these parameters in association with the combination of the computer control system, the sensors, and the entire electromagnetic system (motors, gearing, etc). Due to the linearity of the torque motor, the low friction and low backlash of the gears, and the quality of the sensors, the computer control system can shape the overall dynamic system response over a wide range. Although the present invention will operate with high-friction, high-reduction gearing, this is not desirable because these components may constrain the ability to specify a desired system behavior.

Referring to Fig. 9, once the desired wheel velocity $\omega_d$ has been computed based upon the selected control map, the control circuitry computes the desired motor output through the use of a single-axis velocity servo loop. The velocity servo loop alters the motor torque to maintain the desired wheel velocity $\omega_d$ despite changes in friction (external and internal) or gravity loads imposed by sloped terrains. The computation of the desired motor output is accomplished by the following algorithm, which acts as an error-correction loop:

$$\text{Motor Output} = K_v * [(\omega_d * N_2) - V_m]$$

where $K_v$ is the velocity servo gain, $N_2$ is the gear ratio between the motor 24 and the outer drive wheel 18, and $V_m$ is the measured motor velocity. The measured motor velocity $V_m$ is obtained through the use of the sensor 74 associated with the motor 24. Preferably, the sensor is an optical encoder mounted on the corresponding motor 24.

Referring to Fig. 7, the controller uses the desired motor output to transmit an appropriate control signal to the motor 24. This signal contains magnitude and polarity information which are presented to the motor driver 82 to produce an appropriate motor output. The motor driver 82 converts this signal into a voltage of the appropriate magnitude and polarity to be applied to the motor 24. For this, the motor driver comprises a digital-to-analog converter (DAC), and an H-bridge circuit. The DAC converts the control signal into an analog signal to be applied to the H-bridge circuit, and the H-bridge circuit uses this signal, along with polarity information, to drive the motor 24.

The gearing and control systems, described above, are duplicated for each wheel. Due to the independence of each wheel, the control system parameters can be varied to accommodate the user's particular needs. For example, i f the user has less strength in one arm, the associated side of the wheelchair can be made more sensitive by reducing the mass and drag parameters. Alternatively, both systems can be coupled to produce a uniform response.

**Claims**

1. A wheelchair (10) including at least a drive wheel (18) rotatably connected to a frame (12) comprising:

   a hand rim (22) for receiving a first input force from a user;
   a gear assembly (23) operatively connecting the hand rim (22) to the drive wheel:

   a motor (24) operatively associated with the gear assembly (23) for providing a second force to power the wheelchair (10)
   a transducer (47) configured to output at least one signal indicative of the first input force;
   a sensor (74) configured to output at least one signal indicative of a motion of the drive wheel (18); and
   a controller electrically connected to the sensor (74) and to the transducer (47), the controller being configured
   to receive the output signal from the sensor (74) and the output signal from the transducer (47), **characterised in that** the controller is configured to compute a desired drive wheel velocity using a control map which mimics a system with specific inertia and prescribed drag by a combination of linear and coulomb fiction,
   to compare the computed desired drive wheel velocity with the actual drive wheel velocity and
   to generate and output a control signal to the motor (24) in order to reduce the error component between said desired drive wheel velocity and said actual drive wheel velocity.

2. The wheelchair (10) of claim 1, wherein
   a first gear assembly is operatively associated with the hand rim and the transducer, and
   a second gear assembly is operatively associated with the motor.

3. The wheelchair (10) of claim 1 or 2, wherein the controller comprises:

   a computing device for determining the control signal from the transducer signal using one of the at least one programmed function; and
   a motor driver electrically connected to the computing device for transmitting the control signal to the motor, the control signal including a voltage and a polarity for controlling a speed and a direction of the motor.

4. The wheelchair (10) of claim 3, wherein the computing device is a microprocessor.

5. The wheelchair (10) of claim 3 or 4, wherein the motor driver comprises:

   a digital-to-analog converter for producing said voltage for controlling the speed of the motor; and
   an H-bridge circuit for determining the polarity for controlling the direction of the motor.

6. The wheelchair (10) of any of the preceding claims, wherein the controller further comprises a memory for storing the at least one programmed function.

7. The wheelchair (10) of claim 6, wherein the memory is an electrically erasable programmable read only memory.

8. The wheelchair (10) of any of the preceding claims, wherein the first gear assembly comprises a step-down gear reduction ratio between 0.5 to 2.0.

9. The wheelchair (10) of any of the preceding claims, wherein the second gear assembly comprises a two-stage gear reduction ratio of about 18:1.

10. The wheelchair (10) of any of the preceding claims, wherein the sensor output signal is operatively associated with an error correction program.

11. The wheelchair (10) of any of the preceding claims, further comprising an external computer having at least one input/output port, the external computer configured to receive a functional input, and to output a programmed function to the controller.

12. The wheelchair (10) of claim 11, wherein the at least one input/output port includes an infrared port.

**13.** The wheelchair (10) of any of the preceding claims, wherein the controller is operatively associated with a user interface, the interface comprising:

a switch for selecting a programmed function; and
a display for identifying the selected function.

**Patentansprüche**

**1.** Rollstuhl (10) mit wenigstens einem Antriebsrad (18), das rotierbar mit einem Rahmen (12) verbunden ist, aufweisend:

einen Greifreifen (22) zur Aufnahme einer ersten Eingabekraft von einem Benutzer;
eine Getriebeanordnung (23), die den Greifreifen (22) betriebsmäßig mit dem Antriebsrad verbindet;
einen Motor (24), der betriebsmäßig mit der Getriebeanordnung (23) verbunden ist, um eine zweite Kraft zum Antreiben des Rollstuhls (10) zur Verfügung zu stellen;
einen Signalgeber (47), der eingerichtet ist, wenigstens ein Signal auszugeben, das ein Indikator für die erste Eingabekraft ist;
einen Sensor (74), der eingerichtet ist, wenigstens ein Signal auszugeben, das ein Indikator für eine Bewegung des Antriebsrades (18) ist; und
eine Steuervorrichtung, die elektrisch mit dem Sensor (74) und dem Signalgeber (47) verbunden ist, wobei die Steuerung eingerichtet ist
das Ausgangssignal von dem Sensor (74) und das Ausgangssignal des Signalgebers (47) zu empfangen, **dadurch gekennzeichnet, dass** die Steuervorrichtung eingerichtet ist, eine gewünschte Geschwindigkeit des Antriebsrades unter Benutzung einer Steuertabelle, die ein System mit einer spezifischen Trägheit und einem vorgegebenen Widerstand durch eine Kombination aus linearer Reibung und Coulomb-Reibung imitiert, zu berechnen,
die berechnete gewünschte Geschwindigkeit des Antriebsrades mit der realen Geschwindigkeit des Antriebsrades zu vergleichen und
ein Steuersignal an den Motor (24) zu erzeugen und auszugeben, um die Fehlerkomponente zwischen der gewünschten Geschwindigkeit des Antriebsrades und der realen Geschwindigkeit des Antriebsrades zu reduzieren.

**2.** Rollstuhl (1) nach Anspruch 1, wobei
eine erste Getriebeanordnung betriebsmäßig mit dem Greifreifen und dem Signalgeber verbunden ist, und
eine zweite Getriebeanordnung betriebsmäßig mit dem Motor verbunden ist.

**3.** Rollstuhl (10) nach Anspruch 1 oder 2, wobei die Steuerung aufweist:

eine Berechnungsvorrichtung zum Bestimmen des Steuersignals aus dem Signal des Signalgebers unter Benutzung einer von wenigstens einer programmierten Funktion; und
einen Motorantrieb, der elektrisch mit der Berechnungsvorrichtung verbunden ist, um das Steuersignal an den Motor zu übertragen, wobei das Steuersignal eine Spannung und eine Polarität umfasst, um eine Geschwindigkeit und eine Richtung des Motors zu steuern.

**4.** Rollstuhl (10) nach Anspruch 3, wobei die Berechnungsvorrichtung ein Mikroprozessor ist.

**5.** Rollstuhl (10) nach Anspruch 3 oder 4, wobei der Motorantrieb aufweist:

einen Digital-zu-Analog-Konverter, um die Spannung zur Steuerung der Geschwindigkeit des Motors zu erzeugen; und
eine H-Brückenschaltung zum Bestimmen der Polarität, um die Richtung des Motors zu steuern.

**6.** Rollstuhl (10) nach einem der vorangehenden Ansprüche, wobei die Steuervorrichtung zusätzlich einen Speicher aufweist, um die wenigstens eine programmierte Funktion zu speichern.

**7.** Rollstuhl (10) nach Anspruch 6, wobei der Speicher ein elektrisch löschbarer, programmierbarer Nur-Lese-Speicher ist.

**8.** Rollstuhl (10) nach einem der vorangehenden Ansprüche, wobei die erste Getriebeanordnung ein Untersetzungsverhältnis zwischen 0,5 udn 2,0 aufweist.

**9.** Rollstuhl (10) nach einem der vorangehenden Ansprüche, wobei die zweite Getriebeanordnung ein zweistufiges Untersetzungsverhältnis von ungefähr 18:1 aufweist.

**10.** Rollstuhl (10) nach einem der vorangehenden Ansprüche, wobei das Sensorausgangssignal betriebsmäßig mit einem Fehlerkorrekturprogramm verbunden ist.

**11.** Rollstuhl (10) nach einem der vorangehenden Ansprüche, der zusätzlich einen externen Computer mit wenigstens einem Eingabe-/Ausgabe-Anschluss aufweist, wobei der externe Computer eingerichtet ist, eine funktionale Eingabe zu empfangen und eine programmierte Funktion an die Steuervorrichtung auszugeben.

**12.** Rollstuhl (10) nach Anspruch 11, wobei der wenigstens eine Eingabe-/Ausgabe-Anschluss einen Infrarotanschluss einschließt.

**13.** Rollstuhl (10) nach einem der vorangehenden Ansprüche, wobei die Steuervorrichtung operativ mit einer Benutzerschnittstelle verbunden ist, wobei die Schnittstelle aufweist:

    einen Schalter, um eine programmierte Funktion auszuwählen; und
    eine Anzeige, um die ausgewählte Funktion zu identifizieren.

**Revendications**

**1.** Fauteuil roulant (10) comprenant au moins une roue motrice (18) connectée de manière rotative à un châssis (12), comprenant :

    une main-courante (22) pour recevoir une première force d'entrée de la part d'un utilisateur ;
    un train d'engrenages (23) connectant fonctionnellement la main-courante (22) à la roue motrice ;
    un moteur (24) associé fonctionnellement au train d'engrenages (23) pour fournir une deuxième force pour entraîner le fauteuil roulant (10);
    un transducteur (47) configuré pour délivrer en sortie au moins un signal indicatif de la première force d'entrée ;
    un capteur (74) configuré pour délivrer en sortie au moins un signal indicatif d'un mouvement de la roue motrice (18) ; et
    un dispositif de commande connecté électriquement au capteur (74) et au transducteur (47), le dispositif de commande étant configuré

        - pour recevoir le signal de sortie provenant du capteur (74) et le signal de sortie provenant du transducteur (47), **caractérisé en ce que** le dispositif de commande est configuré pour calculer une vitesse de roue motrice désirée en utilisant une carte de contrôle qui imite un système avec une inertie spécifique et une résistance au mouvement prescrite par une combinaison de frottement linéaire et coulomb,
        - pour comparer la vitesse de roue motrice désirée calculée avec la vitesse de roue motrice réelle et
        - pour générer et délivrer en sortie un signal de commande pour le moteur (24) de manière à réduire la composante d'erreur entre ladite vitesse de roue motrice désirée et ladite vitesse de roue motrice réelle.

**2.** Fauteuil roulant (10) selon la revendication 1, dans lequel
un premier train d'engrenages est associé fonctionnellement à la main-courante et au transducteur, et
un deuxième train d'engrenages est associé fonctionnellement au moteur.

**3.** Fauteuil roulant (10) selon la revendication 1 ou 2, dans lequel le dispositif de commande comprend :

    un dispositif de calcul pour déterminer le signal de commande à partir, du signal de transducteur en utilisant une parmi l'au moins une fonction programmée; et
    un pilote de moteur connecté électriquement au dispositif de calcul pour transmettre le signal de commande au moteur, le signal de commande comprenant une tension et une polarité pour commander une vitesse et une direction du moteur.

**4.** Fauteuil roulant (10) selon la revendication 3, dans lequel le dispositif de calcul est un microprocesseur.

**5.** Fauteuil roulant (10) selon la revendication 3 ou 4, dans lequel le pilote de moteur comprend :

un convertisseur numérique-analogique pour produire ladite tension pour commander la vitesse du moteur ; et un circuit en pont H pour déterminer la polarité pour commander la direction du moteur.

**6.** Fauteuil roulant (10) selon l'une quelconque des revendications précédentes, dans lequel le dispositif de commande comprend en outre une mémoire pour stocker l'au moins une fonction programmée.

**7.** Fauteuil roulant (10) selon la revendication 6, dans lequel la mémoire est une mémoire morte programmable effaçable électriquement.

**8.** Fauteuil roulant (10) selon l'une quelconque des revendications précédentes, dans lequel le premier train d'engrenages comprend un rapport de réduction de démultiplicateur entre 0,5 et 2,0.

**9.** Fauteuil roulant (10) selon l'une quelconque des revendications précédentes, dans lequel le deuxième train d'engrenages comprend un rapport de réduction à deux étages d'environ 18:1.

**10.** Fauteuil roulant (10) selon l'une quelconque des revendications précédentes, dans lequel le signal de sortie de capteur est associé fonctionnellement à un programme de correction d'erreur.

**11.** Fauteuil roulant (10) selon l'une quelconque des revendications précédentes, comprenant en outre un ordinateur externe ayant au moins un port d'entrée/sortie, l'ordinateur externe étant configuré pour recevoir une entrée fonctionnelle et pour délivrer en sortie une fonction programmée au dispositif de commande.

**12.** Fauteuil roulant (10) selon la revendication 11, dans lequel l'au moins un port d'entrée/sortie comprend un port infrarouge.

**13.** Fauteuil roulant (10) selon l'une quelconque des revendications précédentes, dans lequel le dispositif de commande est associé fonctionnellement à une interface utilisateur, l'interface comprenant :

un commutateur pour sélectionner une fonction programmée ; et un affichage pour identifier la fonction sélectionnée.

FIG. 1

FIG. 2

EP 1 216 184 B1

EP 1 216 184 B1

FIG.3

13

FIG.4

EP 1 216 184 B1

FIG. 5

FIG. 6

FIG.7

OVERALL CONCEPT

MEASURED
HANDRIM
TORQUE
→ [ DESIRED DYNAMICS ] →
DESIRED
WHEEL
VELOCITY
$\omega_d$
→ [ VELOCITY SERVO ] ←
MEASURED
MOTOR
POSITION

COMMANDED
MOTOR
TORQUE

FIG.8

COMPUTATION OF DESIRED WHEEL VELOCITY

[ MAXIMUM VELOCITY ]

MEASURED
HANDRIM
TORQUE
→ [ $N_1$ ] → ⊕ → [ $1/m \cdot s$ ] →
DESIRED WHEEL
VELOCITY, $\omega_d$

[ $B_1$ ]

[ $B_2 sgn(\omega_d)$ ]

FIG.10

18

VELOCITY SERVO LOOP

FIG.9

CONTROL MAP

FIG. 11

MEASURED MOTOR VELOCITY, ω

MEASURED
HANDRIM
TORQUE

DESIRED
WHEEL
VELOCITY
ω$_d$

DESIRED
DYNAMICS

VELOCITY
SERVO

BF1

BF2*sgn(ω)

COMMANDED
MOTOR TORQUE

Kf

Kf IS THE FEEDFORWARD GAIN
BF1 IS THE LINEAR FRICTION COMPENSATION TERM
BF2 IS THE COULOMB FRICTION COMPENSATION TERM

FIG. 12

**EP 1 216 184 B1**

**REFERENCES CITED IN THE DESCRIPTION**

**Patent documents cited in the description**

- US 5818189 A
- US 5234066 A
- US 4050533 A
- JP 10014982 A
- WO 9505141 A1
- US 5922035 A